# EUROPÄISCHE PATENTSCHRIFT

(11) **EP 2 814 149 B1**
(45) Veröffentlichungstag und Bekanntmachung des Hinweises auf die Patenterteilung: **13.09.2017**
(21) Anmeldenummer: 14168785.5
(22) Anmeldetag: 19.05.2014
(51) Int. Cl.: H02K 49/10, H02K 49/06

(54) **Rotationseinheit mit einer Hysteresebremsvorrichtung**
Rotary unit with an hysteresis brake device
Ensemble rotatif avec un dispositif frein d'hystérèse

(30) Priorität: 12.06.2013 DE 102013106109
(43) Veröffentlichungstag der Anmeldung: 17.12.2014
(73) Patentinhaber: Gerhard Geiger GmbH & Co., 74321 Bietigheim-Bissingen (DE)
(72) Erfinder: RENZ, Kurt, 71737 Kirchberg (DE)
(74) Vertreter: Fleck, Hermann-Josef

(56) Entgegenhaltungen:
- DE-A1- 19 801 334
- DE-A1- 19 917 667
- DE-U1- 8 235 610
- JP-A- 2005 080 477
- US-A- 3 382 384
- US-A1- 2009 284 091

## Beschreibung

Die Erfindung bezieht sich auf eine Rotationseinheit mit einer Bremsvorrichtung, die zum Erzeugen einer Bremswirkung einen von einer Rotationsachse radial beabstandeten Hysteresekörper und eine mit diesem zusammenwirkende Teileinheit mit einer Permanentmagnetanordnung sowie mindestens einer weiteren Magnetfelderzeugungseinrichtung aufweist, wobei das Magnetfeld der weiteren Magnetfelderzeugungseinrichtung relativ zu dem Magnetfeld der Permanentmagnetanordnung zum Beeinflussen der Bremswirkung änderbar ist.

Eine Rotationseinheit mit einer Bremsvorrichtung ist in der JP 2005 080477 A angegeben. Diese bekannte Rotationseinheit ist als Wirbelstrombremsvorrichtung ausgebildet und weist eine Bremstrommel auf, in der im Zusammenwirken mit einer radial innerhalb dieser liegenden Elektromagnetanordnung Wirbelströme erzeugt werden. In einem Eisenkern der Elektromagnetanordnung sind radial gegenüber der Wicklung innen liegend Permanentmagnetringe eingebettet, um die Magnetwirkung des Elektromagneten zu unterstützen.

Eine weitere Rotationseinheit ist in der DE 82 35 610 U1 gezeigt, wobei es sich um eine Magnetzentraldrehkupplung mit zwei koaxial zueinander drehbaren Kupplungshälften handelt, von denen die äußere ein Hysterese- oder Wirbelstromring und die innere ein Klauenpolläufer ist, zwischen dessen Klauenteilen eine elektrische Spule angeordnet ist.

Die DE 199 17 667 A1 beschreibt eine elektromagnetische Hystereseinheit bei der Umfangsflächen des Nord- und Süd-Pols auf dem gleichen Kreis gegenüber der Umfangsfläche eines umgebenden Hystereserings liegen, wobei die Pole von Polfingern gebildet werden, die von axialen Endflächenwänden eines Magnetkörpers ausgehen, die zueinander ausgerichtet sind und eine größere Entfernung zueinander aufweisen als zum Hysteresering.

In der DE 198 01 334 A1 wird eine elektromagnetische Hysteresebremse einer Garnrolle einer Textilmaschine beschrieben, die wenigstens einen Permanentmagneten in der Nähe einer Magnetspule aufweist, die konzentrisch zum Permanentmagneten angeordnet ist und die gemeinsam in einem dazwischen liegenden Luftspalt ein Magentfeld bilden, wobei der magnetische Fluß des Elektromagneten entweder mit oder entgegen dem magnetischen Fluß des Permanentmagneten ausgerichtet ist. Dabei liefert der Permanentmagnet ungefäht 50% des maximalen Bremsdrehmoments

Eine Rotationseinheit mit einer Hysteresebremsvorrichtung ist in der EP 1 070 827 B1 als Teil einer Antriebsvorrichtung mit einem Motor angegeben. Bei dieser bekannten Antriebsvorrichtung mit Hysteresebremse ist eine Kompensationsspule vorgesehen, mit der die Bremswirkung der Hysteresebremse aufhebbar und somit die Hysteresebremse ein- und ausschaltbar ist. Die Hysteresebremse ist mindestens aus einem Ringmagneten mit mehreren Segmenten und einem den Ringmagneten konzentrisch umgebenden Hystereseband aus Hysteresewerkstoff aufgebaut und die Kompensationsspule umgibt das Hystereseband. Die so gebildete Antriebsvorrichtung ist zum Antrieb für Behänge, Rollläden, Jalousien oder Markisen vorgesehen.

Bei einer solchen Antriebsvorrichtung mit Hysteresebremse kann sich die Bremswirkung ungünstig auf den Antrieb auswirken, da eine vollständige Kompensation der Bremswirkung schwierig ist, und andererseits kann die Bremswirkung unzulänglich sein.

Der Erfindung liegt die Aufgabe zugrunde, eine Rotationseinheit mit einer Hysteresebremsvorrichtung der eingangs genannten Art bereit zu stellen, mit der eine verbesserte Beeinflussung der Bremswirkung erreicht wird.

Diese Aufgabe wird mit den Merkmalen des Anspruches 1 gelöst. Hierbei ist vorgesehen, dass die Permanentmagnetanordnung und die weitere Magnetfelderzeugungseinrichtung in radialer Richtung auf derselben Seite des Hysteresekörpers an geordnet sind, wobei das Magnetfeld der weiteren Magnetfelderzeugungseinrichtung relativ zu dem Magnetfeld der Permanentmagnetanordnung änderbar ist. Das Magnetfeld der weiteren Magnetfelderzeugungseinrichtung ist im Bereich des Hysteresekörpers in gleicher oder entgegengesetzter Richtung zu dem Magnetfeld der Permanentmagnetanordnung einschaltbar.

Für die Funktion und den Aufbau ist dabei die Ausgestaltung vorteilhaft, dass der Hysteresekörper als Hysteresering ausgebildet ist, dass die Permanentmagnetanordnung einen zwischen der radial inneren Seite des Hystereserings und der Wicklung angeordneten ersten Magnetring und einen auf der radial inneren Seite der Wicklung angeordneten zweiten Magnetring mit jeweils einem oder mehreren Paaren aus magnetischem Nord- und Südpol aufweist, dass zwischen dem ersten Magnetring und der radial inneren Seite des Hystereserings ein Spalt für eine reibungsfreie Drehung freigelassen ist, dass die Anordnung aus den beiden Magnetringen und der zwischen diesen angeordneten Wicklung von einer die magnetische Flussdichte verstärkenden metallischen Kapsel eingefasst ist und dass in Umfangsrichtung Nord- und Südpole durch den Aufbau der Kapsel gebildet sind.

Mit diesen Maßnahmen lässt sich das Magnetfeld der Permanentmagnetanordnung gezielt schwächen oder praktisch ganz aufheben, so dass auch die Bremswirkung im Zusammenhang mit dem Hysteresekörper entsprechend verringert oder ganz aufgehoben wird. Umgekehrt kann mittels der weiteren Magnetfelderzeugungseinrichtung das im Bereich des Hysteresekörpers wirkende Magnetfeld der Permanentmagnetanordnung und damit die Bremswirkung verstärkt werden, wenn die Magnetfelderzeugungseinrichtung entsprechend ausgestaltet ist, wozu sie beispielsweise mit einer Umschalteinrichtung versehen sein kann. Ist die Stärke des Magnetfelds der Magnetfelderzeugungseinrichtung kontinuierlich oder in Stufen variierbar, lässt sich die Bremswirkung auch zum Teil schwächen oder verstärken, d.h. eine Steuerung oder Regelung der Bremswirkung und damit des Drehverhaltens der Rotationseinheit erreichen.

Eine gezielte Beeinflussung der Bremswirkung wird vorteilhaft dadurch erreicht, dass die weitere Magnetfelderzeugungseinrichtung mindestens eine bestrombare Wicklung aufweist und ferner dadurch begünstigt, dass der Nord- und der Südpol jedes Paares in Richtung der Rotationsachse nebeneinander liegen

Weitere Vorteile für den Aufbau und die Funktion ergeben sich dadurch, dass die Kapsel zwei Seitenteile aufweist, die an ihren radial außen liegenden Abschnitten mit gegeneinander nach innen gebogenen Zahnreihen versehen sind, welche unter Freilassen eines jeweiligen Spalts ineinandergreifen. Dabei kann z. B. die Breite der Zahnbasis in Umfangsrichtung jeweils in etwa der Breite eines magnetischen Pols entsprechen.

Für die Funktion und den Aufbau sind ferner die Maßnahmen von Vorteil, dass die Zähne parallel zur Rotationsachse von den Seitenteilen abgebogen sind, dass zwischen dem Außenumfang der Zahnreihen und dem Innenumfang des Hystereserings ein geringer Spalt für eine reibungsfreie Drehung zwischen der Kapsel mit der Permanentmagnetanordnung und der mindestens einen Wicklung relativ zu dem Hysteresering freigelassen ist und dass die radial innen liegenden Ränder der Seitenteile mittels eines Rückschlussrings überbrückt sind.

Insbesondere wenn zwischen (beispielsweise mittels eines Elektromotors) angetriebener Rotationsachse und bewegter Last ein Getriebe angeordnet ist, sind zum Erzielen einer guten Bremswirkung die Maßnahmen von Vorteil, dass die Permanentmagnetanordnung und die Magnetfelderzeugungseinrichtung oder der Hysteresering konzentrisch und drehfest mit einer angetriebenen Rotationsachse gekoppelt sind/ist.

Ein vorteilhafter Einsatz der Rotationseinheit des vorstehend genannten Aufbaus besteht in der Anwendung als Teil einer Antriebsvorrichtung für einen Rollladen, eine Jalousie, eine Markise oder Behänge.

Die Erfindung wird nachfolgend anhand von Ausführungsbeispielen unter Bezugnahme auf die Zeichnungen näher erläutert. Es zeigen:
- Fig. 1: eine perspektivische Ansicht einer Rotationseinheit mit Bremsvorrichtung,
- Fig. 2A, 2B und 2C: eine Draufsicht der Rotationseinheit in axialer Richtung, eine Querschnittsdarstellung sowie eine seitliche Ansicht bei weggelassenem Hysteresering,
- Fig. 3: eine perspektivische Querschnittsdarstellung der Rotationseinheit,
- Fig. 4: einen Teil der Rotationseinheit bei weggelassenem Hysteresering nach Fig. 2C in perspektivischer Ansicht,
- Fig. 5: einen Teil der Rotationseinheit nach Fig. 4 bei einem weggelassenem Seitenteil der Kapsel und

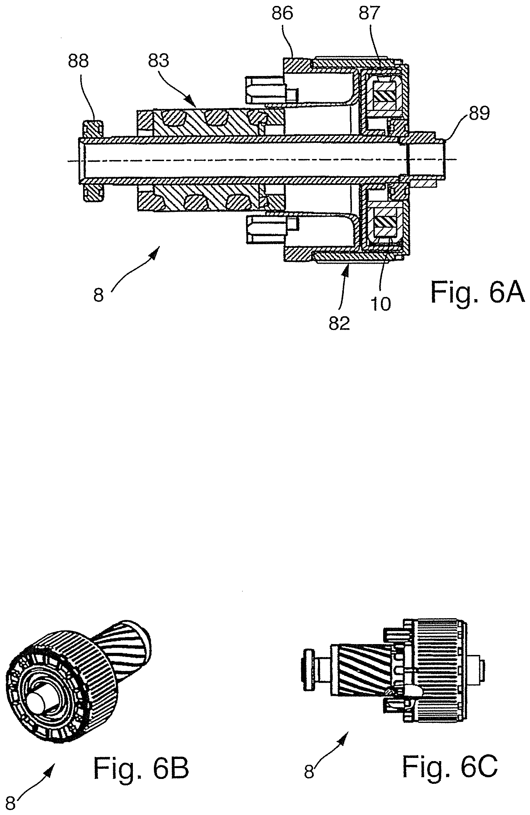

- Fig. 6A, 6B und 6C: eine Antriebsvorrichtung mit Elektromotor und einer eine Hysteresebremsvorrichtung aufweisenden Rotationseinheit im Längsschnitt, einer perspektivischen Ansicht und einer Seitenansicht.

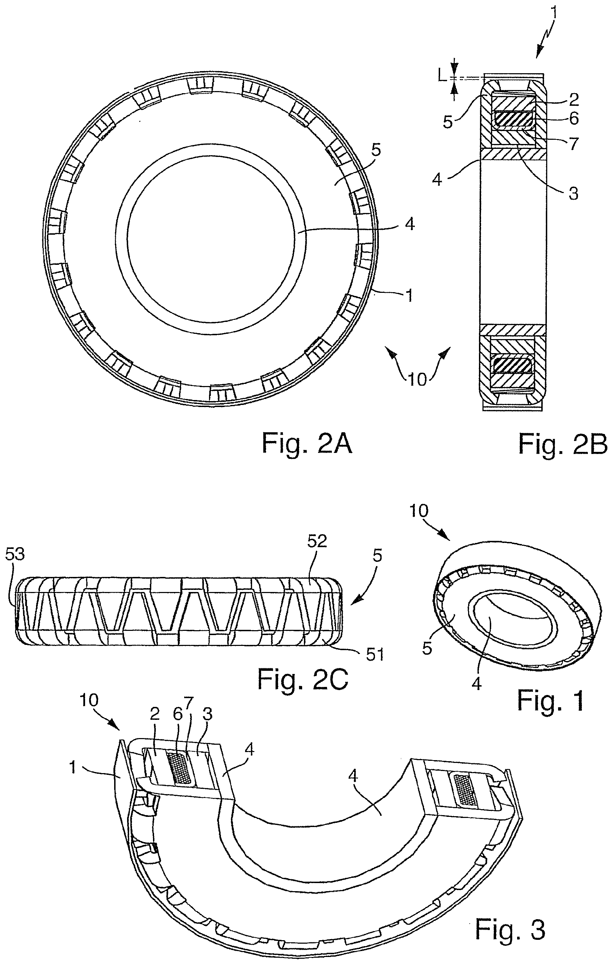

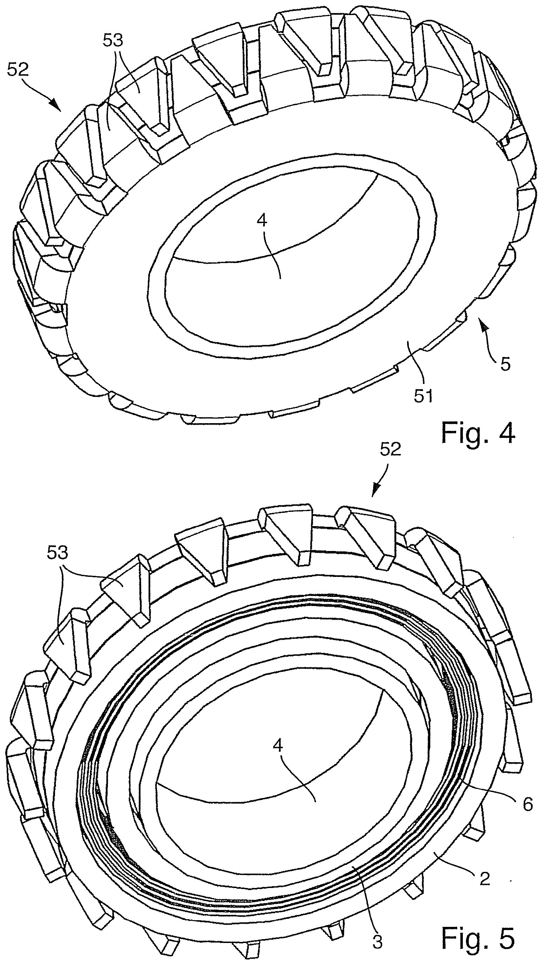

Die Fig. 1 bis 5 zeigen verschiedene Darstellungen einer Bremsvorrichtung 10 für eine Rotationseinheit Die Bremsvorrichtung 10 wird konzentrisch an oder auf einer (nicht dargestellten) Rotationsachse montiert, die z. B. von einer angetriebenen Motorwelle gebildet wird. Die Motorwelle ist vorzugsweise über ein Getriebe mit einer zu bewegenden Last gekoppelt.

Wie aus den Fig. 1, 2A, 2B und 3 ersichtlich, weist die Bremsvorrichtung 10 zwei konzentrisch zueinander angeordnete, relativ zueinander um die Rotationsachse drehbare Teileinheiten, nämlich einen als Hysteresering 1 ausgebildeten Hysteresekörper und eine eine Permanentmagnetanordnung sowie eine weitere Magnetfelderzeugungseinrichtung umfassende Teileinheit auf, wobei der Hysteresering 1 bei dem gezeigten Ausführungsbeispiel die Teileinheit mit der Permanentmagnetanordnung und der weiteren Magnetfelderzeugungseinrichtung radial außen liegend umgibt. Durch das Zusammenwirken des Magnetfelds der Permanentmagnetanordnung und des Hystereserings 1 wird in an sich bekannter Weise eine Bremswirkung erzielt, wobei die Bremskräfte einer relativen Drehbewegung der beiden Teileinheiten entgegenwirken. Die Bremskraft ist neben der Stärke des Magnetfelds auch von den Eigenschaften des Hystereserings 1 (Remanenz, Koerzitivfeldstärke, geometrische Gestaltung) und der Permanentmagnetanordnung (Anordnung der Magnetpole, Material, geometrische Gestaltung) sowie der relativen Anordnung von Hysteresering 1 und der Permanentmagnetanordnung abhängig, wobei unter anderem ein möglichst geringer Spalt zwischen dem Hysteresering 1 und der Permanentmagnetanordnung gewählt werden sollte, der noch eine reibungsfreie Drehung zulässt.

Andererseits soll mit der weiteren Magnetfelderzeugungseinrichtung, die bei dem gezeigten Ausführungsbeispiel als Elektromagnet mit (mindestens) einer Wicklung 6 ausgebildet ist, die zwischen dem Hysteresering 1 und der Permanentmagnetanordnung bewirkte Bremskraft möglichst exakt beeinflussbar sein, um die Bremskraft zu schwächen, möglichst vollständig aufzuheben oder aber zu verstärken. Hierzu ist die Wicklung 6 so angeordnet, dass das bei ihrer Bestromung entstehende Magnetfeld mit dem Magnetfeld der Permanentmagnetanordnung, je nach Stromrichtung, verstärkend oder schwächend bzw. dieses vollständig kompensierend, zusammenwirkt.

Wie insbesondere die Fig. 2B, 3 und 5 zeigen, weist die Permanentmagnetanordnung einen ersten, radial äußeren Magnetring 2 und einen von diesem radial nach innen konzentrisch beabstandeten zweiten, inneren Magnetring 3 auf. Beide Magnetringe 2 und 3 erstrecken sich über eine gewisse Breite in axialer Richtung und sind mit mindestens einem in axialer Richtung nebeneinander liegenden Nord- und Südpol versehen, die ein Paar ungleichnamiger Pole bilden. Dabei besteht eine vorteilhafte Ausgestaltung darin, dass bezüglich der axialen Richtung (Richtung der Rotationsachse) gleichnamige magnetische Pole des äußeren Magnetrings 2 und des inneren Magnetrings 3 positionsgetreu übereinander liegen. Auch können die Magnetringe 2, 3 in Umfangsrichtung mit mehreren Paaren aus magnetischen Nord- und Südpolen versehen sein, wobei sich in Umfangsrichtung Nord- bzw. Südpole abwechseln.

Zwischen den beiden Magnetringen 2, 3 ist die Wicklung 6 angeordnet und in einer Isolierung 7 aufgenommen. Die Wicklung 6 weist eine Vielzahl von Windungen auf, deren Wickelsinn bei dem gezeigten Ausführungsbeispiel in Umfangsrichtung verläuft. Unter anderem über die Anzahl der Windungen, den Leitungsquerschnitt und/oder die Stromstärke, mit der diese beaufschlagt werden, kann die Stärke des durch die weitere Magnetfelderzeugungseinrichtung hervorgerufenen Magnetfelds den jeweiligen Erfordernissen entsprechend angepasst bzw. auch gesteuert oder geregelt werden.

Um die Magnetfelder der Permanentmagnetanordnung und der weiteren Magnetfelderzeugungseinrichtung (vorliegend also des Elektromagneten) gezielt zu führen, sind die Permanentmagnetanordnung und die weitere Magnetfelderzeugungseinrichtung von einer Kapsel 5 umgeben, die eine erhöhte magnetische Flussdichte insbesondere auch im Bereich des Hystereserings 1 bewirkt. Die Kapsel 5 ist aus zwei Seitenteilen 51, 52 zusammengesetzt, die in ihren radial außenliegenden Randbereichen mit Zahnreihen 53 versehen sind, welche achsparallel gegeneinander rechtwinklig eingebogen sind und unter Freilassen eines Spalts ineinander greifen. Die Zähne sind beispielsweise dreieckförmig oder trapezförmig gestaltet, wobei die in die Seitenteile 51, 52 übergehenden Basisbereiche der Zähne in etwa der Breite jeweils zugeordneter Magnetpole entsprechen. Über die Gestaltung der Zahnreihen 53 und die dazwischen liegenden Spalte wird das Magnetfeld vorteilhaft mit dem Hysteresering 1 in Wirkverbindung gebracht, um die gewünschten Bremskräfte zu erzielen. Die radial innenliegenden Ränder der Seitenteile 51, 52 sind mittels eines Rückschlussrings 4 zum Verstärken der magnetischen Wirkung überbrückt. Die Seitenteile 51, 52 mit den Zahnreihen 53 ergeben auch eine vorteilhafte Montage unter Kapselung der Magnetringe 2, 3 und der Wicklung 6 mit der Isolierung 7.

Zum Herstellen einer Rotationseinheit kann entweder die eine Teileinheit mit dem Hysteresering 1oder die andere Teileinheit mit der Permanentmagnetanordnung und der weiteren Magnetfelderzeugungseinrichtung mit einer rotierenden Welle, vorzugsweise einer angetriebenen Rotationsachse gekoppelt werden, während die jeweils andere Teileinheit vorzugsweise fest an einem Träger bzw. Gehäuseteil aufgenommen ist, um die relative Rotationsbewegung zwischen den beiden Teileinheiten zu ermöglichen. Auch ist denkbar, die Teileinheit mit dem Hysteresering 2 mit der Rotationsachse zu verbinden und die andere Teileinheit fest an dem Träger bzw. Gehäuse einzubauen.

Die Rotationseinheit mit der Bremsvorrichtung 10 kann in einer Antriebsvorrichtung z. B. mit einem Elektromotor und einem Getriebe, über das eine Last bewegt wird, eingebaut werden. Fig. 8 zeigt eine Antriebseinheit 8 mit einer Lagerhülse 82, einer Motorwelle 83, einer Abdeckkappe 86, einem Bremselement 87, einem Rillenkugellager 88 und einem Ritzel 89. Hierbei ist die Bremsvorrichtung 10 mit der Motorwelle 83 motorseitig bezüglich eines Getriebes gekoppelt. Dies hat den Vorteil, dass eine angetriebene Last, wie z. B. ein Rollladen oder eine Jalousie, nur mit einer über das Getriebe (z. B. um den Faktor 10, 100 oder höher) reduzierten Kraft bzw. reduziertem Drehmoment auf die Motorwelle 83 wirkt und zum Bremsen eine mit entsprechendem Faktor reduzierte Bremskraft erfordert. Weitere Einbaubeispiele sind Antriebseinheiten für Markisen oder Behänge.

Da die Bremswirkung der Bremsvorrichtung 10 gezielt durch Wahl der Stromrichtung und Steuerung oder Regelung der Stromstärke beeinflussbar ist, lässt sich die Rotationseinheit mit der Bremsvorrichtung vielfältig zur Steuerung oder Regelung insbesondere von Rotationsantrieben verwenden. Bei Stromausfall wirkt die Hysteresebremse infolge der Permanentmagnetanordnung, während bei Bestromung der Wicklung 6 die Bremswirkung praktisch vollständig aufgehoben werden kann, so dass eine möglichst geringe Antriebsenergie erreicht wird. Die Anordnung der Teileinheit mit der gekapselten Permanentmagnetanordnung und weiteren Magnetfelderzeugungseinrichtung auf einer Seite des Hystereserings 2 (in radialer Richtung) ergibt eine definiert und effizient steuerbare Bremsvorrichtung.

## Patentansprüche

1. Rotationseinheit mit einer Bremsvorrichtung (10), die zum Erzeugen einer Bremswirkung einen von einer Rotationsachse radial beabstandeten Hysteresekörper und eine mit diesem zusammenwirkende Teileinheit mit einer Permanentmagnetanordnung sowie mindestens einer weiteren Magnetfelderzeugungseinrichtung aufweist,
- wobei das Magnetfeld der weiteren Magnetfelderzeugungseinrichtung relativ zu dem Magnetfeld der Permanentmagnetanordnung zum Beeinflussen der Bremswirkung änderbar ist,
- wobei die Teileinheit mit der Permanentmagnetanordnung und der weiteren Magnetfelderzeugungseinrichtung in radialer Richtung auf derselben Seite des Hysteresekörpers sich in axialer Richtung mit diesem überlappend angeordnet ist und das Magnetfeld der weiteren Magnetfelderzeugungseinrichtung im Bereich des Hysteresekörpers in gleicher oder entgegengesetzter Richtung zu dem Magnetfeld der Permanentmagnetanordnung einschaltbar ist,
- wobei die weitere Magnetfelderzeugungseinrichtung mindestens eine bestrombare Wicklung (6) aufweist, wobei der Hysteresekörper als Hysteresering (1) ausgebildet ist,
- wobei die Permanentmagnetanordnung einen zwischen der radial inneren Seite des Hystereserings (1) und der Wicklung (6) angeordneten ersten Magnetring (2) und einen auf der radial inneren Seite der Wicklung (6) angeordneten zweiten Magnetring (3) mit jeweils einem oder mehreren Paaren aus magnetischem Nord- und Südpol aufweist,
- wobei zwischen dem ersten Magnetring (2) und der radial inneren Seite des Hystereserings (1) ein Spalt für eine reibungsfreie Drehung freigelassen ist,
- wobei die Anordnung aus den beiden Magnetringen (2, 3) und der zwischen diesen angeordneten Wicklung (6) von einer die magnetische Flussdichte verstärkenden metallischen Kapsel (5) eingefasst ist, und
- wobei in Umfangsrichtung Nord- und Südpole durch den Aufbau der Kapsel (5) gebildet sind.

2. Rotationseinheit nach einem der vorhergehenden Ansprüche, **dadurch gekennzeichnet,**
**dass** der Nord- und der Südpol jedes Paares in Richtung der Rotationsachse nebeneinander liegen.

3. Rotationseinheit nach einem der vorhergehenden Ansprüche, **dadurch gekennzeichnet,**
**dass** die Kapsel (5) zwei Seitenteile (51, 52) aufweist, die an ihren radial außen liegenden Abschnitten mit gegeneinander nach innen gebogenen Zahnreihen (53) versehen sind, welche unter Freilassen eines jeweiligen Spalts ineinandergreifen.

4. Rotationseinheit nach Anspruch 4, **dadurch gekennzeichnet,**
**dass** die Zähne parallel zur Rotationsachse von den Seitenteilen abgebogen sind,
**dass** zwischen dem Außenumfang der Zahnreihen (53) und dem Innenumfang des Hystereserings (1) ein geringer Spalt für eine reibungsfreie Drehung zwischen der Kapsel (5) mit der Permanentmagnetanordnung und der mindestens einen Wicklung (6) relativ zu dem Hysteresering (1) freigelassen ist und dass die radial innen liegenden Ränder der Seitenteile mittels eines Rückschlussrings (4) überbrückt sind.

5. Rotationseinheit nach einem der vorhergehenden Ansprüche, **dadurch gekennzeichnet,**
**dass** die Permanentmagnetanordnung und die Magnetfelderzeugungseinrichtung oder der Hysteresering (1) konzentrisch und drehfest mit einer angetriebenen Rotationsachse gekoppelt sind/ist.

6. Antriebsvorrichtung für einen Rollladen, eine Jalousie, eine Markise oder Behänge mit einer Rotationseinheit nach einem der vorhergehenden Ansprüche.

## Claims

1. A rotary unit with a brake device (10), which, for generating a braking effect, is provided with a hysteresis body, which is radially distanced from a rotational axis, and with a subunit, interacting with the same, with a permanent magnet assembly as well as at least one further magnetic field generating apparatus,
- wherein the magnetic field of the further magnetic field generating apparatus can be varied with respect to the magnetic field of the permanent magnet assembly, in order to influence the braking effect,
- wherein the subunit with the permanent magnet assembly and the further magnetic field generating apparatus is provided on the same side of the hysteresis body and overlaps the same in the axial direction and the magnetic field of the further magnetic field generating apparatus in the area of the hysteresis body may be activated in the same or in the opposite direction with respect to the magnetic field of the permanent magnet assembly,
- wherein the further magnetic field generating apparatus is provided with at least one electrifiable winding (6),
wherein the hysteresis body is provided in the form of a hysteresis ring (1),
- wherein the permanent magnet assembly has a first magnetic ring (2), which is positioned between the radially inner side of the hysteresis ring (1) and the winding (6), and a second magnetic ring (3), which is positioned on the radially inner side of the winding (6), with one or more pairs composed of a magnetic north pole and south pole, respectively,
- wherein between the first magnetic ring (2) and the radial inner side of the hysteresis ring (1) a slit for a frictionless rotation is left clear,
- wherein the assembly composed of both magnetic rings (2, 3) and the winding (6) disposed therebetween is enclosed by a metallic capsule (5) which increases the magnetic flow density, and
- wherein, in the circumferential direction, the north poles and the south poles are formed by the structure of the capsule (5).

2. The rotary unit of any of the preceding claims, **characterized in that** the north pole and the south pole of each pair are positioned one beside the other in the direction of the rotational axis.

3. The rotary unit of any of the preceding claims, **characterized in that** the capsule (5) has two side parts (51, 52), which are provided, in their respective radially outer portions, with mutually inwardly curved teeth rows (53), which engage into each other leaving a respective free slit therebetween.

4. The rotary unit of claim 4,
**characterized in that**
the teeth are curved away from the side parts in parallel to the rotational axis, and
between the outer circumference of the teeth rows (53) and the inner circumference of the hysteresis ring (1), a small slit with respect to the hysteresis ring (1) is left free, for achieving a frictionless rotation between the capsule (5) with the permanent magnet assembly and the at least one winding (6) and that the radially inner edges of the side parts are bridged by a magnetic return path ring (4).

5. The rotary unit of any of the preceding claims, **characterized in that** the permanent magnet assembly and the magnetic field generating apparatus or the hysteresis ring (1) are concentrically and co-rotatably coupled with a driven rotational axis.

6. A drive apparatus for a roller shutter, blind, awning or curtain with a rotary unit of any of the preceding claims.

## Revendications

1. Ensemble rotatif avec un dispositif de freinage (10), qui présente, pour la production d'un effet de freinage, un corps d'hystérésis radialement distant d'un axe de rotation et un ensemble partiel coopérant avec celui-ci avec un agencement d'aimants permanents ainsi qu'au moins un autre dispositif de production de champ magnétique,
- dans lequel le champ magnétique de l'autre dispositif de production de champ magnétique peut être modifié par rapport au champ magnétique de l'agencement d'aimants permanents pour influencer l'effet de freinage,
- dans lequel l'ensemble partiel avec l'agencement d'aimants permanents et l'autre dispositif de production de champ magnétique est agencé dans la direction radiale sur le même côté du corps d'hystérésis en chevauchant celui-ci dans la direction axiale et le champ magnétique de l'autre dispositif de production de champ magnétique peut être commuté dans le même sens ou dans le sens opposé avec le champ magnétique de l'agencement d'aimants permanents,
- dans lequel l'autre dispositif de production de champ magnétique présente au moins un enroulement alimenté en courant (6),
dans lequel le corps d'hystérésis est conçu sous la forme d'un anneau d'hystérésis (1),
- dans lequel l'agencement d'aimants permanents présente un premier anneau magnétique (2) agencé entre le côté radialement interne de l'anneau d'hystérésis (1) et l'enroulement (6) et un second anneau magnétique (3) agencé sur le côté radialement interne de l'enroulement (6) avec, respectivement, une ou plusieurs paires de pôle nord et de pôle sud magnétiques,
- dans lequel un intervalle est ménagé entre le premier anneau magnétique (2) et le côté radialement interne de l'anneau d'hystérésis (1) pour une rotation sans frottement,
- dans lequel l'agencement formé des deux anneaux magnétiques (2, 3) et de l'enroulement (6) agencé entre ceux-ci est enchâssé par un étui métallique (5) renforçant la densité de flux magnétique et
- dans lequel, dans la direction circonférentielle, des pôles nord et des pôles sud sont formés par la structure de l'étui (5).

2. Ensemble rotatif selon l'une quelconque des revendications précédentes, **caractérisé en ce que** :
le pôle nord et le pôle sud de chaque paire se situent l'un à côté de l'autre dans la direction de l'axe de rotation.

3. Ensemble rotatif selon l'une quelconque des revendications précédentes, **caractérisé en ce que** :l'étui (5) présente deux parties latérales (51, 52), qui sont pourvues, sur leurs sections se trouvant radialement à l'extérieur, de rangées de dents (53) incurvées l'une en regard de l'autre vers l'intérieur, qui s'engagent l'une dans l'autre en ménageant un intervalle respectif.

4. Ensemble rotatif selon la revendication 4,
**caractérisé :**
**en ce que** les dents sont incurvées parallèlement à l'axe de rotation des parties latérales,
**en ce que** un petit intervalle pour une rotation sans frottement entre l'étui (5) avec l'agencement d'aimants permanents et le au moins un enroulement (6) par rapport à l'anneau d'hystérésis (1) est ménagé entre la périphérie externe des rangées de dents (53) et la périphérie interne de l'anneau d'hystérésis (1) et en ce que les bords des parties latérales se trouvant radialement à l'intérieur sont pontées au moyen d'un anneau de reflux (4).

5. Ensemble rotatif selon l'une quelconque des revendications précédentes, **caractérisé en ce que** :
l'agencement d'aimants permanents et le dispositif de production de champ magnétique ou l'anneau d'hystérésis (1) est ou sont couplés de manière concentrique et solidaire en rotation avec un axe de rotation entraîné.

6. Dispositif d'entraînement pour un volet roulant, une jalousie, une marquise ou un lambrequin avec un ensemble de rotation selon l'une quelconque des revendications précédentes.
